# EUROPÄISCHE PATENTSCHRIFT

(11) **EP 1 012 011 B1**
(45) Veröffentlichungstag und Bekanntmachung des Hinweises auf die Patenterteilung: **11.12.2002**
(21) Anmeldenummer: 98952532.4
(22) Anmeldetag: 02.09.1998
(51) Int. Cl.: B60R 25/02

(54) **SCHLOSSSYSTEM FÜR EIN FAHRZEUG**
VEHICLE LOCKING SYSTEM
SYSTEME DE SERRURE POUR VEHICULE

(30) Priorität: 12.09.1997 AU PO918197; 26.09.1997 AU PO948097; 22.12.1997 AU PP108997; 16.07.1998 AU 7628398
(43) Veröffentlichungstag der Anmeldung: 28.06.2000
(73) Patentinhaber: ROBERT BOSCH GMBH, 70442 Stuttgart (DE)
(72) Erfinder: TAN, Budi, Endeavour Hills, VIC 3802 (AU); PAVATICH, Gianfranco, Keilor Downs, VIC 3038 (AU)
(86) Internationale Anmeldenummer: DE9802573
(87) Internationale Veröffentlichungsnummer: WO99014085

(56) Entgegenhaltungen:
- EP-A- 0 742 127
- EP-A- 0 794 095
- WO-A-92/16395
- DE-C- 4 436 326
- US-A- 4 761 645
- US-A- 5 036 687

## Beschreibung

Bei den meisten Zündschloßsystemen für Fahrzeuge muß gegenwärtig zum Einschalten eines Zündschalters des Systems ein Zündschlüssel mit einem mechanisch codierten Schaft in einen Schloßzylinder eingesetzt und gedreht werden. Einschalten des Zündschalters und Starten des Fahrzeugs ist nur mit einem mechanisch codierten Schlüssel, der dem Schloßzylinder entspricht, möglich. Die in den Zündschlössern benutzten mechanischen Schloß-Baugruppen sind relativ aufwendig in der Herstellung und bieten weniger Sicherheit als zum Einstieg in das Fahrzeug benutzte elektronische Systeme. Dementsprechend wäre ein Zündschloßsystem, das die genannten Nachteile abmildert oder minimiert oder zumindest den Fahrzeugherstellern eine sinnvolle Alternative bietet, von Vorteil.

Aus der EP-A-794095 ist ein Zündstartschalter bekannt, der sich von einer "Lock"-Position in eine "Check"-Position bringen lässt. In dieser Check-Position wird eine Fahrberechtigungsabfrage mit einem Berechtigungsmittel durchgeführt, in dem ein Code abgelegt ist. Stimmt der von dem Berechtigungsmittel gesendete Code mit dem erwarteten überein, kann das Fahrzeug gestartet werden. Außerdem ist nur nach erfolgreicher Fahrberechtigungsabfrage die Bewegung des Zündstartschalters von der Check-Position in weitere Positionen (ACC, Start) möglich.

Gemäß der Erfindung wird ein Schloßsystem für ein Fahrzeug angegeben, das einschließt:

Ein Schloßsystem für ein Fahrzeug umfassend:
Berechtigungsmittel zum Empfangen eines von einem elektronischen Fernschlüssel gesendeten Berechtigungscodes und zum Erzeugen eines Berechtigungssignals; und
eine Zündschloß-Baugruppe mit:
   einer Zündschaltereinheit;
   einem beweglichen Teil das zwischen zumindest
   einer ersten und einer zweiten Position zum Aktivieren der Zündschaltereinheit beweglich ist;
   elektronische Schloßmittel , die auf das Berechtigungssignal reagieren, um ein Schloßlösesignal zu erzeugen; und
   einen Schloßmechanismus , der eine Benutzung des Fahrzeugs verhindert und auf das Schloßlösesignal hin eine Benutzung des Fahrzeugs ermöglicht, wobei der Schloßmechanismus ein Verriegelungsteil besitzt, das eine Bewegung des beweglichen Teils zwischen den ersten und zweiten Positionen verhindert, und der Schloßmechanismus eine Bewegung des beweglichen Teils bei Eingang des Schloßlösesignals ermöglicht, dadurch gekennzeichnet, daß das Verriegelungsteil eine Schloßzunge der Zündschloß-Baugruppe wenn sich die Schloßzunge in einer verriegelten Position befindet, einrastet, um eine Bewegung der Schloßzunge zu verhindern, und der Schloßmechanismus das Verriegelungsteil (86) zurückzieht, um eine Bewegung der Schloßzunge (80) zu ermöglichen, wenn das Schloßlösesignal eingeht.

Ein alternatives Ausführungsbeispiel betrifft ein Schloßsystem für ein Fahrzeug umfassend:
eine Schloßzunge mit Vorspannung zum Betätigen eines Lenkschloß-Mechanismus;
einen Schloßmechanismus zum Verhindern von Bewegung der Schloßzunge zum Betätigen des Lenkschloß-Mechanismus ; und
ein elektronisches Schloßmittel zum Steuern des Schloßmechanismus für Freigabe der Schloßzunge zum Einrasten des Lenkschloß-Mechanismus, wenn festgelegte Daten eingehen, dadurch gekennzeichnet, daß der Schloßmechanismus ein Verriegelungsteil besitzt, das eine Schloßzunge einer Zündschloß-Baugruppe einrastet, wenn sich die Schloßzunge in einer
Entriegelungsposition befindet, um eine Bewegung der Schloßzunge zu verhindern, wobei das elektronische Schloßmittel zum Erzeugen eines Schloßlösesignals auf das Schloßzustandssignal anspricht und der Schloßmechanismus das Verriegelungsteil zum Ermöglichen einer Bewegung der Schloßzunge zurückzieht, wenn das Schloßlösesignal eingeht.

Bevorzugte Ausführungsarten eines Schloßsystems werden nachstehend beispielhaft unter Bezugnahme auf die beigefügten Zeichnungen beschrieben, wobei die Erfindung in den Figuren 4 bis 8 dargesellt wird. Es zeigen:
Figur 1 einen isometrischen Teilquerschnitt einer bevorzugten Ausführungsart einer Zündschloß-Baugruppe eines Zündschloßsystems;
Figur 2 einen Teilquerschnitt der Zündschloß-Baugruppe;
Figur 3 ein Blockdiagramm des Zündschloßsystems;
Figur 4 einen isometrischen Teilquerschnitt einer anderen bevorzugten Ausführungsart einer Schloß-Baugruppe;
Figur 5 ein Blockdiagramm der Schlußbaugruppe von Figur 4;
Figur 6 ein Blockdiagramm eines Teils der Baugruppe von Figur 4
Figur 7 ein Blockdiagramm einer alternativen Schloßzunge der Baugruppe von Figur 4 und
Figuren 8 bis 10 schematische Diagramme für die verschiedenen Positionen der alternativen Schloßzunge für verschiedene Zustände der Schloß-Baugruppe von Figur 4.

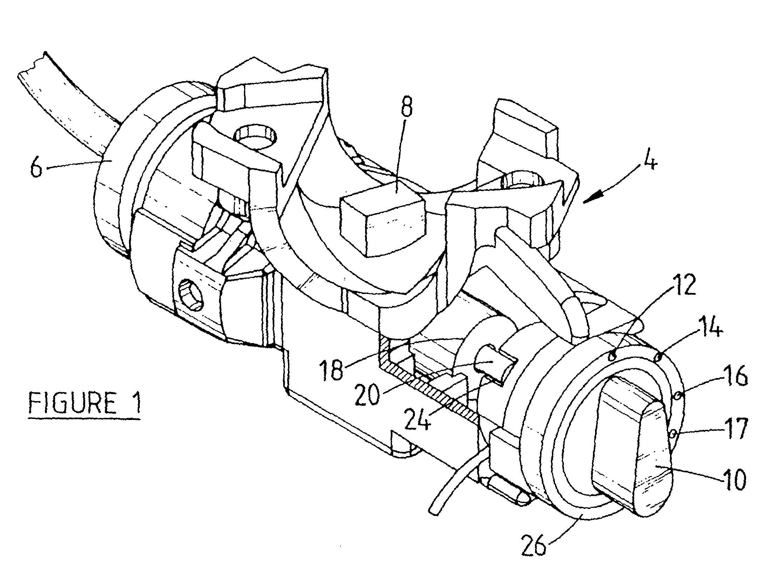

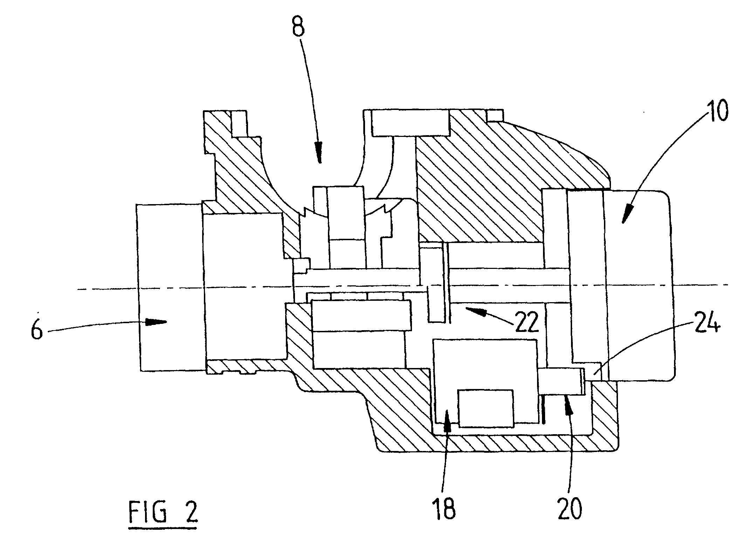

Eine Zünd- und Lenkschloß-Baugruppe 4 eines Zündschloßsystems wie in Figuren 1 und 2 gezeigt beinhaltet einen Standard-Zündschalter 6, einen Standard-Lenkschloß-Mechanismus mit einer Schloßzunge 8 und einem Drehknopf 10, der gedreht werden kann zwischen einer AUS-Position 12, einer ZUSATZGERÄTE-Position 14, einer ZÜND-Position 16 und einer vierten wahlweisen und momentan START- oder AN-LASS-Position 17. Der mechanische Schloßmechanismus, der einen Schloßzylinder enthält, ist aber entfernt. Der mechanische Schloßmechanismus verhindert normalerweise Bewegung des Drehknopfes 10, bis ein entsprechender mechanisch codierter Schlüssel in die Baugruppe 4 eingesetzt wird. Statt dessen beinhaltet die Baugruppe 4 einen Elektromagneten 18 mit einem beweglichen Verriegelungstauchkern 20, der dann, wenn ausgefahren, Bewegung des Drehknopfes 10 zwischen den AUS- und ZUSATZGERÄTE-Positionen 12 und 14 außer bei nachgewiesener Berechtigung für Fahrzeugzugang verhindert. Der Elektromagnet 18 sitzt abgeschlossen im Gehäuse der Baugruppe 4. Der Tauchkern 20 des Elektromagneten 18 wird dann, wenn der Elektromagnet nicht erregt ist, durch Federkraft in ausgewogener Position gehalten.

Wird der Elektromagnet 18 bei Zugangsberechtigung aktiviert oder erregt, wird der Verriegelungstauchkern 20 eingezogen, so daß der Drehknopf 10 zwischen den AUS- und ZUSATZGERÄTE-Positionen 12 und 14 bewegt werden kann. Der Drehknopf 10 ist durch einen Wellenmechanismus 22 wie in Figur 2 gezeigt mit dem Zündschalter 6 so verbunden, daß bei Drehung des Knopfes 10 in die ZÜND-Position 16 oder die optionale START-Position 17 der Zündschalter 6 betätigt, Fahrerberechtigungs-Prüfung initiiert und das Fahrzeug gestartet wird, falls das Fahrrecht nachgewiesen ist.

Der in den Figuren gezeigte Drehknopf 10 hat hinten eine Aussparung 24 zum Aufnehmen des Verriegelungstauchkerns 20 in der AUS-Position 12. Nachdem das Fahrzeug einmal gestartet worden ist, wird der Drehknopf 10 in der START-Position gehalten, bis eine Person das Fahrzeug sicher abstellt, indem sie den Knopf 10 in die ZUSATZGE-RÄTE- oder AÜS-Position 14 oder 12 zurückdreht. Um von der ZUSATZGERÄTE-Position 14 weiter in die AUS-Position 12 zu schalten, ist eine Drück- und Drehbewegung erforderlich. Spezieller wird der Knopf 10, während er sich in ZUSATZGERÄTE-Position 14 befindet, hineingedrückt und dann in die AUS-Position 12 gedreht, damit Aktivierung des Lenkschlosses ermöglicht wird. Das Fahrzeug wird dann mit einem elektronischen Schlüssel 40 verriegelt, bei dem es sich um einen Fernschlüssel, eine Smart Card oder einen Transponder eines passiven Einstiegssystems zum Deaktivieren des Elektromagneten 18 per Meldungen von einem Türschloßmodul 30 zu einem Zündschloßmodul 32 wie nachstehend beschrieben, handeln kann. Der Schlüssel 40 kann zwei Kommunikationsprotokolle beinhalten: eines zum Ermöglichen von Fahrzeugeinstieg und Erregen des Elektromagneten 18 und ein sichereres Protokoll zur Kommunikation mit dem Elektroniksystem, um Starten des Fahrzeugs zu ermöglichen, d. h. für Fahrerberechtigung.

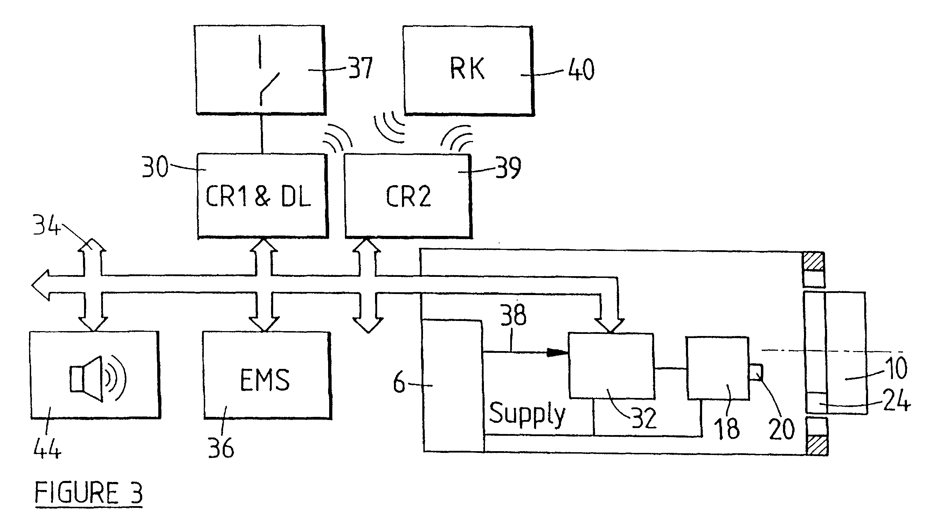

Ein elektronisches System wie das in Figur 3 gezeigte beinhaltet ein Türschloß-Steuermodul 30 mit einem Codeleser oder Sender/Empfänger (Transceiver), einem Zündschloß-Steuermodul 32 für den Elektromagneten 18 und einen Fahrer-Berechtigungsleser oder Sender/Empfänger (Transceiver) 39, die alle durch ein Bussystem oder lokales Netzwerk (LAN) 34 innerhalb des Fahrzeugs verbunden sind. Das Bussystem 34 verbindet auch den Codeleser 30 mit dem Modul 36 des Motormanagementsystems (EMS) des Fahrzeugs sowie mit einem Sirenen- oder Läutewerk-Modul 41. Der Zündschalter 6 gibt Schalterpositionssignale 38 entsprechend der Stellung des Knopfes 10 an das Zündschloß-Steuermodul 32 ab. Diese abgegebenen Schalterpositionssignale 38 werden durch das Zündschloß-Steuermodul 32 verarbeitet und dann dem Bussystem 34 als Statusmeldungen zur Verfügung gestellt. Das Türschloß-Modul 30 kommuniziert mit dem Schlüssel 40, um einen Zugangsberechtigungscode zu gewinnen, der Drehen des Drehknopfes 10 ermöglicht. Beim Abfragen des elektronischen Schlüssels nach dem Zugangsberechtigungscode tauscht das Modul 30 einen Code, der verschlüsselt werden kann, mit dem EMS-Modul 36 und dem Zündschloß-Steuermodul 32 aus. Durch Betätigen eines Türgriffschalters 37 des Fahrzeugs wird Zugangsabfrage veranlaßt. Das Zündschloß-Steuermodul 32 enthält Verarbeitungsschaltungen zum Nachprüfen des Zugangsberechtigungscodes, wobei auch eine Entschlüsselungsprozedur ausgeführt werden kann. Erweist sich der Zugangsberechtigungscode als gültig, erzeugt das Modul 32 ein Treibsignal für den Elektromagneten 18 zum Zurückziehen des Tauchkerns, wie in Figur 3 gezeigt. Dieser Vorgang ermöglicht Drehen des Knopfes 10 und letztlich Starten des Fahrzeugs, indem der Knopf 10 in die ZUSATZGERÄTE-Position 14 und dann die ZÜND-Position 16 oder die optionale START-Position gedreht wird, sofern Fahrberechtigung besteht.

Der elektronische Schlüssel 40 kann als Fernbedienungsschlüssel mit Aktivierungstasten oder als Schlüssel oder Smart Card ohne Tasten in einem passiven Einstiegssystem implementiert werden. Der Schlüssel 40 kann mit einem Kommunikationssignal durch Aktivieren des Schalters 37 zum Aktivieren des Kommunikationsprotokolls arbeiten.

Zugangsberechtigung und Fahrberechtigung werden aus Gründen des Diebstahlschutzes und auch der Betriebssicherheit wegen separat gewährt. Die Zugangsberechtigung betrifft den Elektromagneten 18, während die Fahrberechtigung von Einfluß auf den Erfolg eines Versuchs, den Motor des Fahrzeugs zu starten, ist, Sobald der Motor einmal läuft, sind keine Berechtigungskontrollen erforderlich. Während der Berechtigungskontrollen muß sich der Schlüssel 40 in der Nähe der Lesermodule 30 und 39 befinden. Die bevorzugte Folge von Schritten zum Entriegeln, Fahren und Verriegeln des Fahrzeugs ist:
1. Aktivieren einer Zugangsberechtigungs-Prozedur durch eine Taste des Schlüssels 40 oder durch Aktivieren des Türgriffschalters 37. Das Türmodul 30 übermittelt eine verschlüsselte Berechtigungsmeldung. Das Zündschloß-Modul 32 empfängt die Zugangsberechtigungsmeldung und aktiviert den Elektromagneten 18 so, daß dessen Tauchkern 20 zum Freigeben des Drehknopfes 10 zurückgezogen wird.
2. Der Drehknopf 10 wird hineingedrückt und von der AUS-Position in die ZUSATZGERÄTE-Position 14 gedreht.
3. Der Drehknopf wird von der ZUSATZGERÄTE-Position 14 in die ZÜND-Position 16 oder die optionale START-Position 17 gedreht. Die Zündsignal-Speiseeinrichtung liefert ein Aktivierungssignal an das Modul 30 zum Aktivieren der Fahrberechtigungsprozedur. Ist Fahrberechtigung gegeben, gibt das Modul 39 eine Fahrberechtigungsmeldung auf das Bussystem 34, und diese aktiviert das EMS-Modul 36, so daß der Motor gestartet (angelassen) wird.
4. Wird der Drehknopf 10 von der ZÜND-Position 16 in die ZUSATZGERÄTE-Position 14 gedreht, stoppt der Motor.
5. Der Knopf 10 wird in der ZUSATZGERÄTE-Position 14 hineingedrückt und in die AUS-Position 12 zum Einrasten des Lenkschloß-Mechanismus 8 gedreht.
6. Das Fahrzeug wird mit einer Taste des Schlüssels 40 oder dem Türgriffschalter 37 verriegelt. Dabei wird der Elektromagnet 18 durch eine Busmeldung deaktiviert, die das Türschloß-Modul 30 abgibt und die an das Zündschloß-Modul 32 übermittelt wird. Die Feder im Elektromagneten drückt den Tauchkern 20 in die hintere Aussparung 24 des Drehknopfes 10, die als Aufnahme dient. Dieses gewährleistet Verriegeln des Knopfes 10, wenn das Fahrzeug nach Fahrzeugzugang nicht gefahren wird.

Unterbleibt der Schritt 5, weil direkt vom Schritt 4 zum Schritt 6 übergegangen wird, wird ein Warnsignal gegeben, und oder das Türschloßsystem wird nicht aktiviert. Dieses ist eine Aufforderung an den Benutzer des Fahrzeugs, zurückzugehen und den Schritt 5 auszuführen. Das Zündschloß-Steuermodul 32 benutzt die abgegebenen Schalterpositionssignale 38 zum Ermitteln des Zündschloßstatus, und eine Busmeldung kann abgegeben werden, wenn das Modul eine Schloßmeldung vom Türschloß-Modul 30 erhält, die mit der jeweiligen Position des Schalters 6 nicht übereinstimmt oder dieser nicht entspricht. Dieses Busmeldung ergeht an das Türschloß-Steuermodul 30 und/oder das Läutewerk-Modul 41 als Einschaltsignal. Das Türschloß-Modul 30 kann eine Betätigungsanforderung ignorieren.

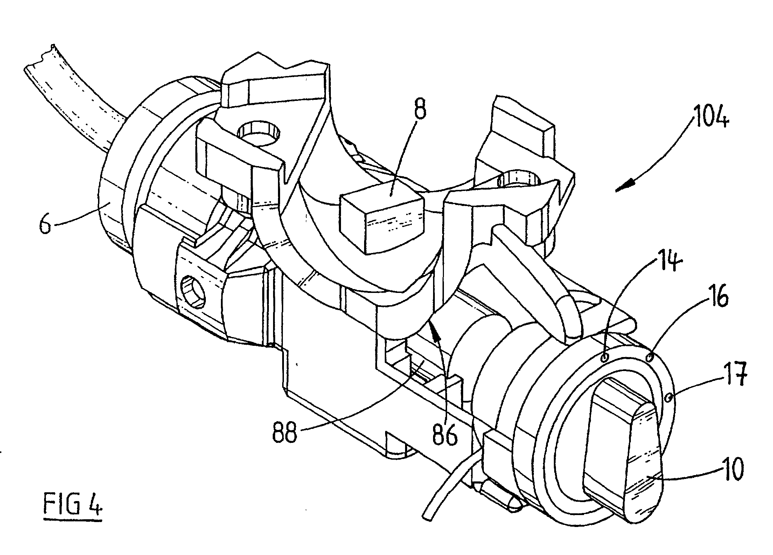

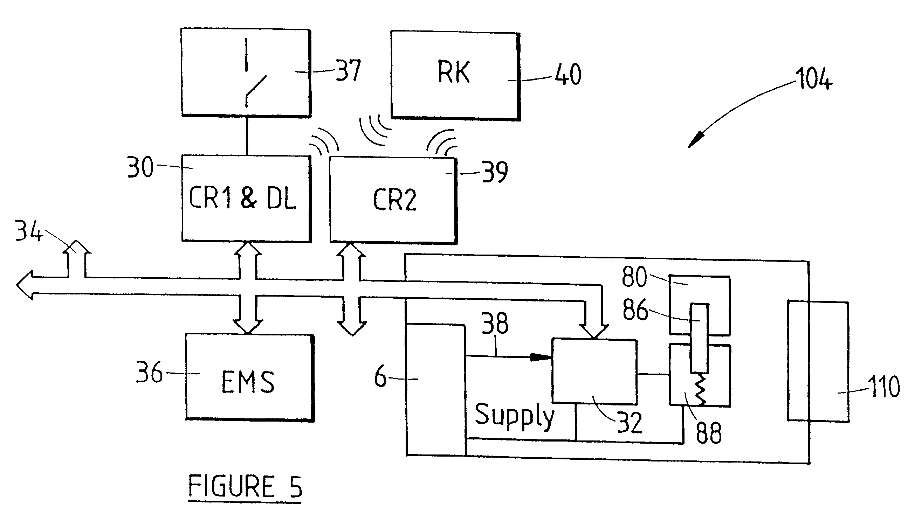

Bei einem alternativen Schloßsystem 104 wie dem in den Figuren 4 bis 10 gezeigten ist eine Warnsignalgabe zum Betätigen des Lenkschloß-Mechanismus nicht erforderlich, da automatische Aktivierung erfolgt, wenn der Motor abgestellt wird, das Fahrzeug steht und die Türen verriegelt sind. Alternativ kann der Lenkschloß-Mechanismus eingerastet werden, wenn festgestellt wird, daß die Türen verriegelt sind und der elektronische Schlüssel 40 sich außerhalb der Reichweite der Lesermodule 30 und 39 befindet.

Die Zünd- und Lenkschloß-Baugruppe 104 enthält keinen mechanischen Zündschloßmechanismus, da der Schloßzylinder fehlt, und wiederum sind keinerlei Vorkehrungen zum Einstecken eines Zündschlüssels mit codiertem Schaft in den Drehknopf 110 getroffen. Auch ist der Elektromagnet 18 für den Drehknopf 10 durch einen elektromechanischen Blockiermechanismus (EMB) 88 mit einem federbelasteten Tauchkern 86, der auf die Schloßzunge 80 wie unten beschrieben wirkt, ersetzt. Der EMB-Mechanismus 88 kann ein Elektromagnet oder ein angetriebener Motor sein. Dementsprechend fehlt die Aussparung 24 im Knopf 110. Bei der Zündschloß-Baugruppe 104 fehlt auch die AUS-Position. Der Drehknopf 110 der Baugruppe 104 kann sich zwischen einer ZUSATZGERÄTE-Position 14 und einer ZÜND-Position 16 und auch von der ZÜND-Position 16 in eine optionale und nur momentane START- oder ANLASS-Position 17 bewegen.

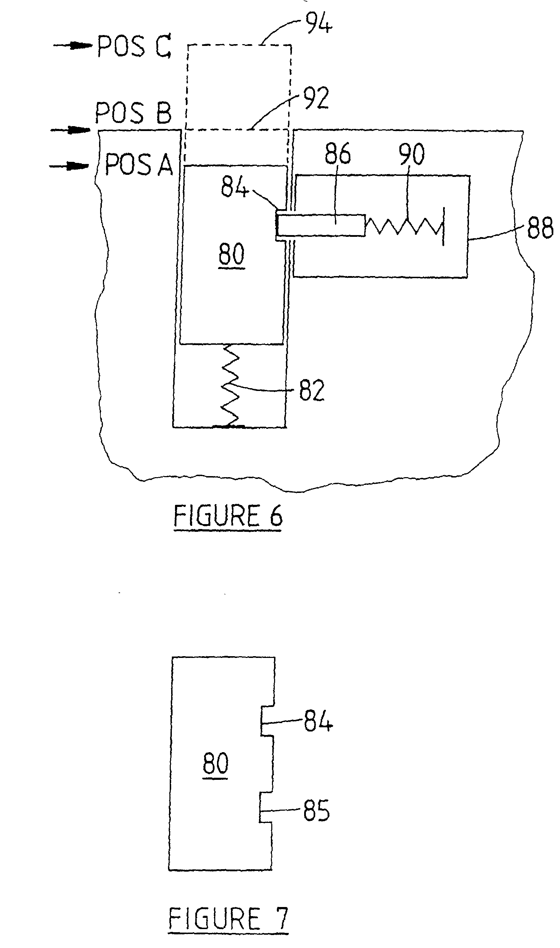

Automatische Betätigung des Lenkschloß-Mechanismus erfolgt durch Einbeziehung der Lenkschloßzunge 18 in die Baugruppe 104. Die Zunge 80 gleicht der Schloßzunge 8, sofern sie durch eine Vorspannfeder 82 federbelastet wird, weicht aber dadurch ab, daß sie wie in Figur 6 gezeigt einen Seitenwand-Hohlraum 84 besitzt. Der Seitenwand-Hohlraum 84 dient zum Aufnehmen des Tauchkerns 86 des EMB-Mechanismus 88, der zur Aktivierung elektrisch mit dem Schloßmodul 32 verbunden ist. Befindet sich der Fahrer bei laufendem Motor im Wagen, ist der Lenkschloß-Mechanismus ausgerastet, und die Schloßzunge 80 liegt in der Position A wie in Figur 6 gezeigt. Der EMB-Mechanismus 88 bewirkt unter der Wirkung der Vorspannfeder 90, daß der Tauchkern 86 in den Hohlraum 84 der Zunge 80 eingreift, wodurch die Zunge 80 in Position A gehalten wird. Die Zunge 80 kann somit zum Einrasten des Lenkschloß-Mechanismus nur durch Erregen des EMB-Mechanismus 88 und Zurückziehen des Tauchkerns 86 gelöst werden. Das Zündschloßmodul 32 gibt einen entsprechenden Befehl, wenn es feststellt, daß der Drehknopf 10 von der ZÜND-Position 16 in die ZUSATZGERÄTE-Position 14 bewegt worden ist, und zusätzlich empfängt das Modul 32 ein Signal oder verschiedene zur Anzeige (1), daß die Türen des Fahrzeugs verriegelt worden sind und (2), daß die Fahrgeschwindigkeit null beträgt. Die Schloßzunge 80 wird dann zum Einrasten des Lenkschloß-Mechanismus unter der Wirkung der Zungenvorspannfeder 82 gelöst. Die Zunge 80 geht dann in die mit den gestrichelten Linien 92 dargestellte Position B, wenn das Lenkrad nicht zentriert ist, und geht in die mit den gestrichelten Linien 94 dargestellte Position C, wenn das Lenkrad zentriert wird. Dieses gewährleistet, daß der Lenkschloß-Mechanismus, nachdem der Fahrer den Motor abgestellt hat, das Fahrzeug steht und die Türen verriegelt worden sind, eingerastet werden kann. Der Lenkschloß-Mechanismus kann später, wie schon besprochen, durch Hineindrücken und Bewegen des Drehknopfes 10 ausgerastet werden.

Von Vorteil ist, daß die Schloßbaugruppe 104 so konfiguriert werden kann, daß der Lenkschloß-Mechanismus mechanisch mit der Welle 42 zum Bewegen des Drehknopfes 10 verbunden ist, so daß dann, wenn die Schloßzunge 80 gelöst wird, um den Lenkschloß-Mechanismus einzurasten, dadurch gleichzeitig auch ein Sperrmechanismus in Funktion gesetzt wird, der Bewegung des Drehknopfes 10 verhindert, so wie nachstehend beschrieben.

Für sicheres elektronisches Lösen des Drehknopfes 10 und des Lenkschloß-Mechanismus kann die Zunge 80 mit einem zusätzlichen Hohlraum 85 wie in Figur 7 ausgeführt werden, der niedriger liegt als der erste Hohlraum 84, so daß der Tauchkern 86 durch die Schloßzunge 80, dann, wenn bei eingerastetem Schloßmechanismus in Position C gehalten, aufgenommen wird. Dieses stellt sicher, daß die Schloßmechanismen nur nach einer elektronischen Freigabeprozedur, die Erregen des EMB-Mechanismus 88 einschließt, gelöst werden können.

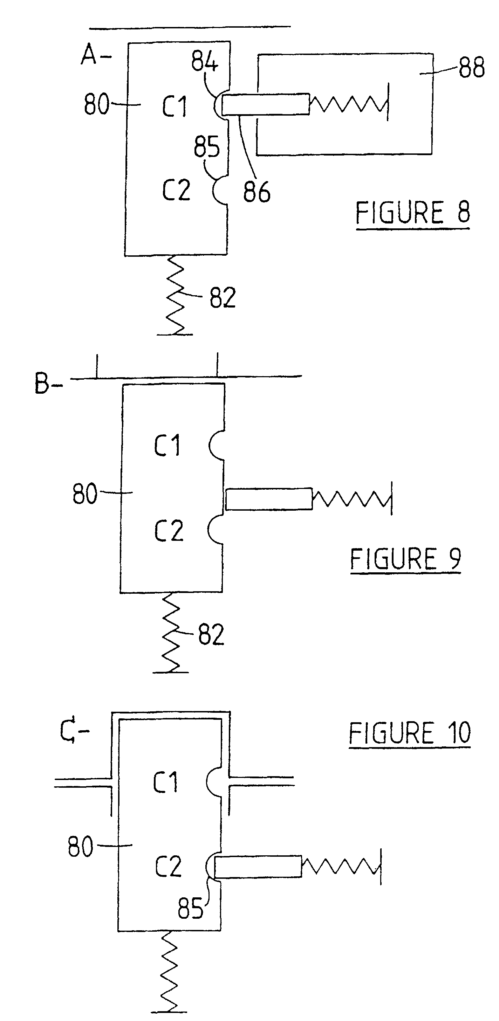

Im folgenden wird das Verhalten der Verriegelungszunge 80 mit den zwei Hohlräumen 84 und 85 unter Bezugnahme auf die Figuren 8 bis 10 beschrieben. Bei fahrendem Fahrzeug hat der EMB-Mechanismus 88 seinen Tauchkern 86 in den ersten Hohlraum 84 eingerückt, d. h. die Zunge 80 befindet sich wie in der Figur 8 gezeigt, in Position A. In der Position A der Verriegelungszunge 80 kann der Fahrer den Drehknopf 110 unbehindert von der ZÜND-Position 14 in die ZUSATZGERÄTE-Position 12 drehen, um den Motor abzustellen. Wenn wie schon beschrieben die Türen des Fahrzeugs verriegelt worden sind und die Fahrgeschwindigkeit null beträgt, weist das Zündschloß-Modul 32 den EMB-Mechanismus 88 an, den Tauchkern 84 zum Freigeben der Zunge 80 einzuziehen, damit sich die Zunge 80 unter der Wirkung der Vorspannfeder 82 in die Position B oder C, je nachdem, ob das Lenkrad zentriert ist oder nicht, bewegen kann. Wenn beim späteren Einsteigen in das Fahrzeug das Lenkrad zentriert ist oder zentriert wird, steht die Verriegelungszunge 80 wie in der Figur 10 gezeigt in Position C, und der Lenkradschloß-Mechanismus ist eingerastet. Da der Lenkschloß-Mechanismus auch mit dem Verriegelungsmechanismus für den Drehknopf 110 verbunden ist, ist es nicht möglich, den Drehknopf 110 von der ZUSATZGERÄTE-Position 14 in die ZÜND-Position 16 oder die START-Position 17 zu drehen. In der Position C ist der Tauchkern 86 des EMB-Mechanismus 88 durch die Wirkung der Vorspannfeder 90 ausgezogen und greift in den zweiten Hohlraum 85 ein, so daß die Zunge 80 in Position C arretiert ist. Demgemäß kann weder das Lenkrad noch der Drehknopf 110 des Fahrzeugs bewegt werden, außer wenn die folgende Löseprozedur richtig ausgeführt wird. Die Löseprozedur beinhaltet:
(i) Hineindrücken des Drehknopfes 110, damit die Ausführung der Fahrerberechtigungsprozedur eingeleitet wird.
(ii) Das Zündschloß 132 stellt das Hineindrücken des Schloßmoduls 110 fest und weist den Fahrerberechtigungsleser 39 an, den elektronischen Schlüssel 40 abzufragen.
(iii) Hat sich nach Ausführung der Fahrerberechtigungsprozedur Berechtigung des Fahrers ergeben, wird eine positive Meldung an das Zündmodul 32 abgegeben.
(iv) Das Zündschloßmodul 32 weist den EMB-Mechanismus 88 an, den Tauchkern 86 zurückzuziehen, und der Lenkmechanismus sowie der Zündschloß-Mechanismus können durch Hineindrücken und Drehen des Drehknopfes 110 und Drehen am Lenkrad des Fahrzeugs gelöst werden.

Falls gewünscht, kann ein zweiter EMB-Mechanismus, der auf den Verriegelungsmechanismus für den Drehknopf 110 wirkt, vorgesehen werden.

Dem Fachmann wird klar sein, daß viele technische Änderungen vorgenommen werden können, ohne den vorstehend beschriebenen Rahmen dieser Erfindung zu verlassen.

## Patentansprüche

1. Schloßsystem für ein Fahrzeug umfassend:
Berechtigungsmittel (30, 39) zum Empfangen eines von einem elektronischen Fernschlüssel (40) gesendeten Berechtigungscodes und zum Erzeugen eines Berechtigungssignals; und
eine Zündschloß-Baugruppe (104) mit:
einer Zündschaltereinheit (6);
einem beweglichen Teil (110), das zwischen zumindest einer ersten und einer zweiten Position zum Aktivieren der Zündschaltereinheit (6) beweglich ist;
elektronische Schloßmittel (32), die auf das Berechtigungssignal reagieren, um ein Schloßlösesignal zu erzeugen; und
einen Schloßmechanismus (80, 88), der eine Benutzung des Fahrzeugs verhindert und auf das Schloßlösesignal hin eine Benutzung des Fahrzeugs ermöglicht, wobei der Schloßmechanismus (80, 88) ein Verriegelungsteil (86) besitzt, das eine Bewegung des beweglichen Teils ( 110) zwischen den ersten und zweiten Positionen verhindert, und der Schloßmechanismus (80, 88) eine Bewegung des beweglichen Teils (110) bei Eingang des Schloßlösesignals ermöglicht, **dadurch gekennzeichnet, daß** das Verriegelungsteil (86) eine Schloßzunge (80) der Zündschloß-Baugruppe (104), wenn sich die Schloßzunge (80) in einer verriegelten Position befindet, einrastet, um eine Bewegung der Schloßzunge (80) zu verhindern, und der Schloßmechanismus (80, 88) das Verriegelungsteil (86) zurückzieht, um eine Bewegung der Schloßzunge (80) zu ermöglichen, wenn das Schloßlösesignal eingeht.

2. Schloßsystem nach Anspruch 1, **dadurch gekennzeichnet, daß** das Verriegelungsteil (86) das bewegliche Teil (110) in einer der Positionen zum Verhindern der Bewegung des beweglichen Teils (10, 110) einrastet.

3. Schloßsystem nach Anspruch 1 oder 2, **dadurch gekennzeichnet, daß** das bewegliche Teil (110) ein an die Zündschaltereinheit (6) gekoppelter drehbarer Knopf (10, 110) ist.

4. Schloßsystem nach Anspruch 1, **dadurch gekennzeichnet, daß** der Schloßmechanismus (80, 88) ein Verriegelungsteil (86) besitzt, das eine Lenkschloßzunge (80) der erwähnten Zündschloß-Baugruppe (104) einrastet, wenn sich die Schloßzunge (80) in einer Entriegelungsposition befindet, um eine Bewegung der erwähnten Schloßzunge (80) zu verhindern, wobei das elektronische Schloßmittel (32) auf ein Schloßzustandssignal zum Erzeugen des Schloßlösesignals reagiert und der Schloßmechanismus das Verriegelungsteil (86) zum Ermöglichen von einer Bewegung der SchloßZunge (80) zurückzieht, wenn das Schloßlösesignal eingeht.

5. Schloßsystem nach Anspruch 1, **dadurch gekennzeichnet, daß** das Verriegelungsteil (86) die Schloßzunge (80) einrastet, wenn sich die erwähnte Schloßzunge (80) in einer Entriegelungsposition befindet, um eine Bewegung der Schloßzunge (80) zu verhindern, wobei das elektronische Schloßmittel (32) auf ein Schloßzustandssignal zum Erzeugen des Schloßlösesignals reagiert und der Schloßmechanismus (80,88) das Verriegelungsteil (86), um eine Bewegung der Schloßzunge (80) zu ermöglichen, zurückzieht, wenn das Schloßlösesignal eingeht.

6. Schloßsystem nach Anspruch 4 oder 5, **dadurch gekennzeichnet, daß** das Schloßzustandssignal anzeigt, daß die Türen des Fahrzeugs verriegelt sind und daß die Geschwindigkeit des Fahrzeugs bei einem festgelegten Wert liegt.

7. Schloßsystem nach Anspruch 1 oder 4, **dadurch gekennzeichnet, daß** die Schloßzunge (80) eine Aussparung zum Aufnehmen des Verriegelungsteils (86) aufweist.

8. Schloßsystem nach Anspruch 5, **dadurch gekennzeichnet, daß** die Schloßzunge (80) zwei Aussparungen zum Aufnehmen des Verriegelungsteils (86) aufweist.

9. Schloßsystem nach Anspruch 7 oder 8, **dadurch gekennzeichnet, daß** die Schloßzunge (80) unter Vorspannung zum Einrasten eines Lenkschloß-Mechanismus steht.

10. Schloßsystem nach irgendeinem der obigen Ansprüche, **dadurch gekennzeichnet, daß** der Schloßmechanismus (80, 88) einen elektromechanischen Blockiermechanismus (80) mit einem Tauchkern (20, 86), der durch Vorspannung ausgefahren ist und dann, wenn der Schloßmechanismus (80, 88) das Schloßlösesignal empfängt, zurückgezogen wird, einschließt.

11. Schloßsystem nach Anspruch 1, **dadurch gekennzeichnet, daß** die Schaltereinheit (6) repräsentative Signale für die Position des beweglichen Teils (110) für das Schloßmittel (32) erzeugt.

12. Schloßsystem nach Anspruch 13, **dadurch gekennzeichnet, daß** das elektronische Schloßmittel (32) das Berechtigungsmittel (30, 39) anweist, den elektronischen Schlüssel (40) nach einem Fahrerberechtigungssignal abzufragen, wenn sich das bewegliche Teil (110) zwischen den ersten und zweiten Positionen bewegt.

13. Schloßsystem nach Anspruch 11, **dadurch gekennzeichnet, daß** das elektronische Schloßmittel (32) dann ein Warnsignal erzeugt, wenn sich das erwähnte bewegliche Teil (10, 110) in einer der Positionen befindet, die nicht einem durch das elektronische Schloßmittel (32) empfangenen Schloßsignal entspricht.

14. Schloßsystem für ein Fahrzeug umfassend:
eine Schloßzunge (80) mit Vorspannung zum Betätigen eines Lenkschloß-Mechanismus;
einen Schloßmechanismus (88) zum Verhindern von Bewegung der Schloßzunge (80) zum Betätigen des Lenkschloß-Mechanismus; und
ein elektronisches Schloßmittel (32) zum Steuern des Schloßmechanismus (88) für Freigabe der Schloßzunge (80) zum Einrasten des Lenkschloß-Mechanismus, wenn festgelegte Daten eingehen, **dadurch gekennzeichnet, daß** der Schloßmechanismus (80, 88) ein Verriegelungsteil (86) besitzt, das eine Schloßzunge (80) einer Zündschloß-Baugruppe (104) einrastet, wenn sich die Schloßzunge (80) in einer
Entriegelungsposition befindet, um eine Bewegung der Schloßzunge (80) zu verhindern, wobei das elektronische Schloßmittel (32) zum Erzeugen eines Schloßlösesignals auf das Schloßzustandssignal anspricht und der Schloßmechanismus (88) das Verriegelungsteil (86) zum Ermöglichen einer Bewegung der Schloßzunge (80) zurückzieht, wenn das Schloßlösesignal eingeht.

15. Schloßsystem nach Anspruch 14, **dadurch gekennzeichnet, daß** die festgelegten Daten ein Schloßzustandssignal umfassen.

16. Schloßsystem nach Anspruch 15, **dadurch gekennzeichnet, daß** das Schloßzustandssignal anzeigt, daß die Türen des Fahrzeugs verriegelt sind und daß die Geschwindigkeit des Fahrzeugs bei einem festgelegten Wert liegt.

17. Schloßsystem nach Anspruch 14, **dadurch gekennzeichnet, daß** die Schloßzunge (80) eine Aussparung zum Aufnehmen des Verriegelungsteils (86) aufweist.

18. Schloßsystem nach Anspruch 17, **dadurch gekennzeichnet, daß** die Schloßzunge (80) zwei Aussparungen zum Aufnehmen des Verriegelungsteils (86) aufweist und das Verriegelungsteil (86) in die Lenkschloßzunge (80) der Zündschloß-Baugruppe (104) eingreift, wenn sich die Schloßzunge (80) in einer Verriegelungsposition befindet, um eine Bewegung der Schloßzunge (80) zu verhindern.

## Claims

1. Lock system for a vehicle comprising:
authorization means (30, 39) for receiving an authorization code transmitted by an electronic remote key (40), and for generating an authorization signal;
and an ignition lock assembly (104) having:
an ignition switch unit (6);
a moveable part (110) which can be moved between at least a first position and a second position in order to activate the ignition switch unit (6);
electronic lock means (32) which react to the authorization signal in order to generate a lock release signal; and
a lock mechanism (80, 88) which prevents use of the vehicle and permits use of the vehicle in response to the lock release signal, the lock mechanism (80, 88) having a locking part (86) which prevents movement of the moveable part (110) between the first and the second positions, and the lock mechanism (80, 88), permitting movement of the moveable part (110) when the lock release signal is received, **characterized in that**, when a lock tongue (80) of the ignition lock assembly (104) is in a locked position, the locking part (86) engages the lock tongue (80) in order to prevent movement of the lock tongue (80), and the lock mechanism (80, 88) draws the locking part (86) back in order to permit movement of the lock tongue (80) when the lock release signal is received.

2. Lock system according to Claim 1, **characterized in that** the locking part (86) engages the moveable part (110) in one of the positions in order to prevent the movement of the moveable part (10, 110).

3. Lock system according to Claim 1 or 2, **characterized in that** the moveable part (110) is a rotatable knob (10, 110) which is coupled to the ignition switch unit (6).

4. Lock system according to Claim 1, **characterized in that** the lock mechanism (80, 88) has a locking part (86) which, when a steering lock tongue (80) of the aforesaid ignition lock assembly (104) is in an unlocking position, engages the lock tongue (80) in order to prevent movement of the aforesaid lock tongue (80), the electronic lock means (32) reacting to a lock state signal in order to generate the lock release signal, and the aforesaid lock mechanism drawing the locking part (86) back in order to permit movement of the aforesaid lock tongue (80) when the lock release signal is received.

5. Lock system according to Claim 1, **characterized in that** when the lock tongue (80) is in an unlocking position, the locking part (86) engages the aforementioned lock tongue (80) in order to prevent movement of the lock tongue (80), the electronic lock means (32) reacting to a lock state signal in order to generate the lock release signal, and the lock mechanism (80, 88) drawing the locking part (86) back in order to permit movement of the lock tongue (80) when the lock release signal is received.

6. Lock system according to Claim 4 or 5, **characterized in that** the lock state signal indicates that the doors of the vehicle are locked and that the speed of the vehicle is at a specific value.

7. Lock system according to Claim 1 or 4, **characterized in that** the lock tongue (80) has a cut-out for receiving the locking part (86).

8. Lock system according to Claim 5, **characterized in that** the lock tongue (80) has two cut-outs for receiving the locking part (86).

9. Lock system according to Claim 7 or 8, **characterized in that** the lock tongue (80) is subject to prestress in order to engage a steering lock mechanism.

10. Lock system according to any of the above claims, **characterized in that** the lock mechanism (80, 88) includes an electromechanical blocking mechanism (80) with a plunger core (20, 86) which is extended by prestress and withdrawn when the lock mechanism (80, 88) receives the lock release signal.

11. Lock system according to Claim 1, **characterized in that** the switch unit (6) generates representative signals for the position of the moveable part (110) for the lock means (32).

12. Lock system according to Claim 13, **characterized in that** the electronic lock means (32) instructs the authorization means (30, 39) to interrogate the electronic key (40) for a driver authorization signal if the moveable part (110) moves between the first and second positions.

13. Lock system according to Claim 11, **characterized in that** the electronic lock means (32) generates a warning signal if the aforesaid moveable part (10, 110) is in one of the positions which does not correspond to a lock signal received by the electronic lock means (32).

14. Lock system for a vehicle comprising:
a lock tongue (80) with prestress for activating a steering lock mechanism;
a lock mechanism (88) for preventing the movement of the lock tongue (80) for activating the steering lock mechanism; and
an electronic lock means (32) for controlling the lock mechanism (88) to release the lock tongue (80) for engagement of the steering lock mechanism if specific data is received, **characterized in that** the lock mechanism (80, 88) has a locking part (86) which, when a lock tongue (80) of a steering lock assembly (104) is in an unlocking position, engages the lock tongue (80) in order to prevent movement of the lock tongue (80), the electronic lock means (32) responding to the lock state signal in order to generate a lock release signal, and the lock mechanism drawing the locking part (86) back in order to permit movement of the lock tongue (80) when the lock release signal is received.

15. Lock system according to Claim 14, **characterized in that** the specific data comprises a lock state signal.

16. Lock system according to Claim 15, **characterized in that** the lock state signal indicates that the doors of the vehicle are locked and that the speed of the vehicle is at a specified value.

17. Lock system according to Claim 14, **characterized in that** the lock tongue (80) has a cut-out for receiving the locking part.

18. Lock system according to Claim 17, **characterized in that** the lock tongue (80) has two cut-outs for receiving the locking part (86), and if the lock tongue (80) is in a locking position the locking part (86) engages in the steering lock tongue (80) of the ignition lock assembly (104) in order to prevent movement of the lock tongue (80).

## Revendications

1. Système de serrure pour un véhicule comprenant :
- des moyens d'autorisation (30, 39) pour accueillir un code d'autorisation émis à distance par une clé électronique (40) et pour délivrer un signal d'autorisation,
- un groupe constructif à serrure de contact (104) comportant une unité d'établissement du contact (6), une pièce mobile (110) pouvant passer d'une première à une seconde position pour activer l'unité d'établissement du contact (6),
- des moyens électroniques de serrure (32) qui réagissent au signal d'autorisation en délivrant un signal de libération de la serrure,
- un mécanisme de serrure (80, 88) qui empêche l'utilisation du véhicule pour l'autoriser sous l'action du signal de libération de la serrure, ce mécanisme (80, 88) possédant une partie de verrouillage (86) empêchant la pièce mobile (110) de passer de la première à la seconde position, un déplacement de la pièce mobile (110) étant autorisé par le mécanisme de serrure (80, 88) quand est émis le signal de libération de serrure,
**caractérisé en ce que**
la partie de verrouillage (86) pénètre dans une languette de serrure (80) appartenant au groupe constructif à serrure de contact (104) quand la languette (80) occupe une position de verrouillage, afin d'empêcher le déplacement de cette languette (80), et le mécanisme de serrure (80, 88), quand est émis le signal de libération de la serrure, ramène en arrière la partie de verrouillage (86) pour permettre à la languette de serrure (80) de se déplacer.

2. Système de serrure selon la revendication 1,
**caractérisé en ce que**
la partie de verrouillage (86) bloque la pièce mobile (110) dans une des positions prévues pour empêcher le mouvement de la pièce mobile (10, 110).

3. Système de serrure selon l'une quelconque des revendications 1 ou 2,
**caractérisé en ce que**
la pièce mobile (110) est un bouton rotatif (10, 110) accouplé à l'unité d'établissement du contact (6).

4. Système de serrure selon la revendication 1,
**caractérisé en ce que**
le mécanisme de serrure (80, 88) possède une partie de verrouillage (86) qui bloque une languette de verrouillage de direction (80) du groupe constructif à serrure de contact (104) quand cette languette (80) se trouve en position de déverrouillage, de manière à empêcher son mouvement, et le moyen électronique de serrure (32) réagit à un signal d'état de la serrure pour produire le signal de libération de la serrure, le mécanisme de serrure tirant en arrière la partie de verrouillage (86) pour permettre le déplacement de la languette de serrure (80) quand est émis le signal de libération de la serrure.

5. Système de serrure selon la revendication 1,
**caractérisé en ce que**
la partie de verrouillage (86) bloque la languette de serrure (80) quand celle-ci occupe une position de déverrouillage, de manière à empêcher son déplacement, et le moyen électronique de serrure (32) réagit à un signal d'état de serrure pour produire le signal de libération de serrure, le mécanisme de serrure tirant en arrière la partie de verrouillage (86) pour permettre le déplacement de la languette de serrure (80) quand est émis le signal de libération de la serrure.

6. Système de serrure selon l'une quelconque des revendications 4 ou 5,
**caractérisé en ce que**
le signal d'état de serrure indique que les portes du véhicule sont verrouillées et que la vitesse du véhicule a une valeur fixée.

7. Système de serrure selon l'une quelconque des revendications 1 ou 4,
**caractérisé en ce que**
la languette de serrure (80) présente un évidement pour accueillir la partie de verrouillage (86).

8. Système de serrure selon la revendication 5,
**caractérisé en ce que**
la languette de serrure (80) présente deux évidements pour accueillir la partie de verrouillage (86).

9. Système de serrure selon l'une quelconque des revendications 7 ou 8,
**caractérisé en ce que**
la languette de serrure (80) est précontrainte dans le sens du blocage d'un mécanisme de verrouillage de la direction.

10. Système de serrure selon l'une quelconque des revendications précédentes,
**caractérisé en ce que**
le mécanisme de serrure (80, 88) comprend un mécanisme de blocage (80) comportant un noyau plongeur (20, 86) qui est poussé en avant par la précontrainte et ramené en arrière quand le mécanisme de serrure (80, 88) reçoit le signal de libération.

11. Système de serrure selon la revendication 1,
**caractérisé en ce que**
l'unité d'établissement du contact (6) émet à destination des moyens de serrure (32) des signaux représentatifs de la position de la pièce mobile (110).

12. Système de serrure selon la revendication 11,
**caractérisé en ce que**
le moyen électronique de serrure (32) et le moyen d'autorisation (30, 39) donnent à l'électronique, après un signal d'autorisation du conducteur, l'ordre de demander si la pièce mobile (110) se déplace entre la première et la seconde position.

13. Système de serrure selon la revendication 11,
**caractérisé en ce que**
le moyen électronique de serrure (32) produit un signal avertisseur si la pièce mobile (10, 110) occupe une des positions qui ne correspond pas au signal de serrure reçu par le moyen électronique de fermeture (32).

14. Système de serrure pour un véhicule automobile comprenant
- une languette de serrure (80) sous précontrainte destinée à actionner un mécanisme de verrouillage de direction,
- un mécanisme de serrure (88) pour empêcher le mouvement de la languette de serrure (80) destiné à actionner le mécanisme de verrouillage de direction,
- un moyen électronique de serrure (32) pour donner au mécanisme de serrure (88) l'ordre de libérer la languette de serrure (80) bloquant le mécanisme de verrouillage de la direction quand apparaissent des données déterminées,
**caractérisé en ce que**
le mécanisme de serrure (80, 88) possède une partie de verrouillage (86) qui pénètre dans une languette de serrure (80) d'un groupe constructif à serrure de contact (104) pour empêcher son déplacement quand la languette (80) se trouve en position de déverrouillage le moyen électronique de serrure (32), pour obtenir un signal de libération de la serrure, demande le signal d'état de serrure et le mécanisme de serrure (88) ramène en arrière la partie de verrouillage (86) pour permettre à la languette de serrure (80) de se déplacer quand est émis le signal de libération de serrure.

15. Système de serrure selon la revendication 14,
**caractérisé en ce que**
les données déterminées comprennent un signal d'état de la serrure.

16. Système de serrure selon la revendication 15,
**caractérisé en ce que**
le signal d'état de la serrure indique que les portes du véhicule sont verrouillées et que la vitesse de celui-ci atteint une valeur déterminée.

17. Système de serrure selon la revendication 14,
**caractérisé en ce que**
la languette de serrure (80) présente un évidement pour accueillir la partie de verrouillage (86).

18. Système de serrure selon la revendication 17,
**caractérisé en ce que**
la languette de serrure (80) présente deux évidements pour accueillir la partie de verrouillage (86), et la partie de verrouillage (86) pénètre dans cette languette (80) de blocage de la direction appartenant au groupe constructif de la serrure de contact (104), quand la languette (80) occupe une position de verrouillage, de manière à empêcher cette languette de se déplacer.
